# EUROPEAN PATENT SPECIFICATION

(11) **EP 1 021 949 B1**
(45) Date of publication and mention of the grant of the patent: **07.07.2004**
(21) Application number: 99203201.1
(22) Date of filing: 30.09.1999
(51) Int. Cl.: A01K 5/00

(54) **A mobile device for delivering fodder and a method for delivering fodder**
Mobile Abgabevorrichtung für Futter und Verfahren zur Futterabgabe
Dispositif mobile pour décharger du fourrage et méthode pour décharger du fourrage

(30) Priority: 22.01.1999 NL 1011109
(43) Date of publication of application: 26.07.2000
(73) Proprietor: Trioliet Mullos B.V., 7575 BE Oldenzaal (NL)
(72) Inventor: Van der Plas, Nicolaas, 7576 WB Oldenzaal (NL)
(74) Representative: de Vries, Johannes Hendrik Fokke

(56) References cited:
- WO-A-94/24851
- DE-A- 3 427 076
- GB-A- 2 010 109
- US-A- 5 429 436

## Description

The invention relates to a mobile device according to the preamble of claim 1.

The storage chamber of the mobile device may be provided with a movable metering element, which is capable of metered movement of the fodder inside the storage chamber towards the conveying means.

The device is for example a device for mixing and/or loosening fodder, wherein the storage chamber is a mixing chamber including one or more movable mixing elements. The conveying element may for example be a conveyor belt or a conveyor chain. The outlet opening can for example be a closable opening.

A device of this kind can be moved by mounting it on a supporting vehicle, but usually such a device will be fitted with wheels, so that it can run on its own. The device may be self-propelling or be designed to be coupled to a tractive vehicle.

The device may be loaded with fodder at a suitable location, which fodder can be introduced into the storage chamber through an inlet opening. The storage opening may be open at its upper side for that purpose, but it is also possible to provide the side wall of the storage chamber with an inlet opening, which may or may not be closable, through which fodder can be supplied to the storage chamber.

The present description in particular concerns a mixing device wherein the conveying means comprise a conveyor belt, but the invention also relates to a device which does not mix the fodder and/or which comprises different conveying means.

While the fodder is being mixed in the mixing chamber, the device may be moved to the location where the fodder is to be delivered, in particular the feeding place of cattle. At that location a predetermined amount of fodder can be delivered by opening the outlet opening to a particular degree and for a particular length of time, so that a predetermined amount of fodder will fall onto the conveying element and be carried off by said conveying element to the feeding place, which is located beside the device, seen in the direction of movement thereof.

In this manner it is possible to deliver predetermined amounts of fodder to a number of feeding places arranged in a row. It is not unusual for a stable to have a central corridor with feeding places present on either side thereof. In such a case, but also in other cases, it may be desirable to be able to deliver the fodder on both sides of the mobile device, seen in the direction of movement of the device.

To that end the device may be provided on either side with a conveying element or other conveying means for delivering fodder. When the outlet opening is present at the rear side of the device, it is possible to use two conveyor belts, which are positioned in line with each other and which move in opposite directions, both beginning near each other in the centre of the device under the outlet opening of the storage chamber. Such a device is shown in DE-A-34 27 076.

Especially when the fodder is not symmetrically distributed over the storage chamber, the fodder will not at all times be distributed uniformly over the outlet opening upon exiting the storage chamber. Although it is generally possible to control the amount of fodder which exits the storage chamber, it is difficult to distribute that amount evenly, or in a particular proportion, for example, over two feeding places located on either side of the device.

The object of the invention is to provide a mobile device for delivering fodder by means of which predetermined amounts of fodder can be simultaneously delivered to two feeding places in an effective manner.

According to the invention a mobile device having the features of claim 1 is provided. The storage chamber may include movable metering means for the metered movement of fodder to the conveying element through the outlet opening.

The two conveying elements may be mounted in such a manner that the fodder will fall onto the two conveying elements in equal amounts, or in a particular proportion, also if the fodder exits the storage chamber through the outlet opening not centrally but in a "lopsided" manner.

The two conveying elements, for example conveyor belts, may have the same width, but in a preferred embodiment the conveying elements have mutually different widths, which may be advantageous when the fodder falls onto the conveying elements in an asymmetric manner.

Preferably, control means are present which can selectively cause the two conveying elements to move in the same direction or in opposite directions at the same speed or at different, adjustable speeds. This makes it possible to deliver a predetermined amount of fodder for each individual feeding place to one feeding place at a time or to two feeding places simultaneously.

In one preferred embodiment, the device is fitted with wheels and the device can be coupled to a tractive vehicle, wherein the conveying means are mounted on the side of the device remote from the tractive vehicle, that is, at the rear of the vehicle combination, seen in the direction of forward movement thereof. As a result, the device will not drive straight past or over the fodder that has already been delivered when moving forward, so that the cattle can start eating undisturbed immediately after delivery of the fodder.

In one preferred embodiment, the mixing chamber is fitted with one or more mixing elements which rotate about substantially vertical axes. Especially when one such mixing element is provided, the fodder is not carried off through the outlet opening in a straight line.

Preferably, shifting means are present for moving one conveying element, or both, in a direction substantially transversely to their direction of movement. As a result, the position of one conveying element, or both, can be geared to the nature of the fodder and to the manner in which the fodder in question falls from the outlet opening. The length of fibre, for example, plays a role thereby. Preferably, a conveying element can be shifted to a position under the bottom of the mixing chamber, so that the fodder which is carried off through the outlet opening, which may be provided substantially in the side wall of the mixing chamber, will land at some distance from the edge of the conveying element that faces towards the mixing chamber.

Preferably, shifting means are present for moving a conveying element in dependence on the degree to which the outlet opening has been opened. The opening of the outlet opening and the shifting of the conveying elements can take place by means of hydraulic cylinders, wherein the shifting means are made up of a control unit, which interconnects the movements of the various hydraulic cylinders. Also a mechanical connection, for example by means of a cable, is possible.

In one preferred embodiment, one conveying element, or both, for example conveyor belts, is (are) fitted with guide rollers whose axes of rotation include an angle with the horizontal. Thus, the upper surface of the conveying element may lie in a sloping plane, as a result of which the fodder deposited onto the conveying element can spread more evenly over the conveying element or move over one conveying element to the other conveying element.

The sloping position of the guide rollers may be such that the two conveying elements are tilted to an equal or unequal degree in the same transverse direction. Said tilting may also take place in opposite directions, wherein the sides of the two conveying elements lying near each other are positioned higher or lower than the other part of the conveying element surface. Depending on the shape of the outlet opening and the manner in which the fodder is carried off therethrough, this makes it possible to achieve an optimum distribution of the fodder over the conveying elements.

In one preferred embodiment, the two conveying elements are so mounted that one conveying element is positioned partially under the other, so that the fodder which is initially present on one conveying element can fall onto the other conveying element so as to distribute the fodder over the two conveying elements.

In another preferred embodiment, guide rollers of one of the two conveying elements have a smaller diameter than guide rollers of the other conveying element, and the former conveying element is positioned partially within said other conveying element. In this manner, an overlap of the conveying elements is obtained when seen in top plan view, whilst the surfaces of the two conveying elements may lie approximately in one plane.

The invention furthermore relates to a method according to claim 14.

Further aspects, which may be used both separately and in combination with each other, are disclosed in the description of the figures and defined in the claims.

In order to explain the invention more fully, an embodiment of a mobile mixing device will now be described with reference to the drawings, as will several positions of conveying elements in the form of conveyor belts.
Figure 1 is a perspective view of a part of the device;
Figure 2 is a top plan view of said device;
Figure 3 shows positions of conveyor belts lying in one plane;
Figure 4 shows positions of a horizontal and a sloping conveyor belt;
Figure 5 shows positions of two sloping conveyor belts;
Figure 6 shows conveyor belts which are positioned one above the other;
Figure 7 is a sectional view of two conveyor belts positioned one within the other;
Figure 8 is a view of conveyor belts positioned one within the other; and
Figure 9 shows positions of conveyor belts positioned one within the other.

The figures are merely schematic representations, wherein parts corresponding to each other are indicated by the same numerals.

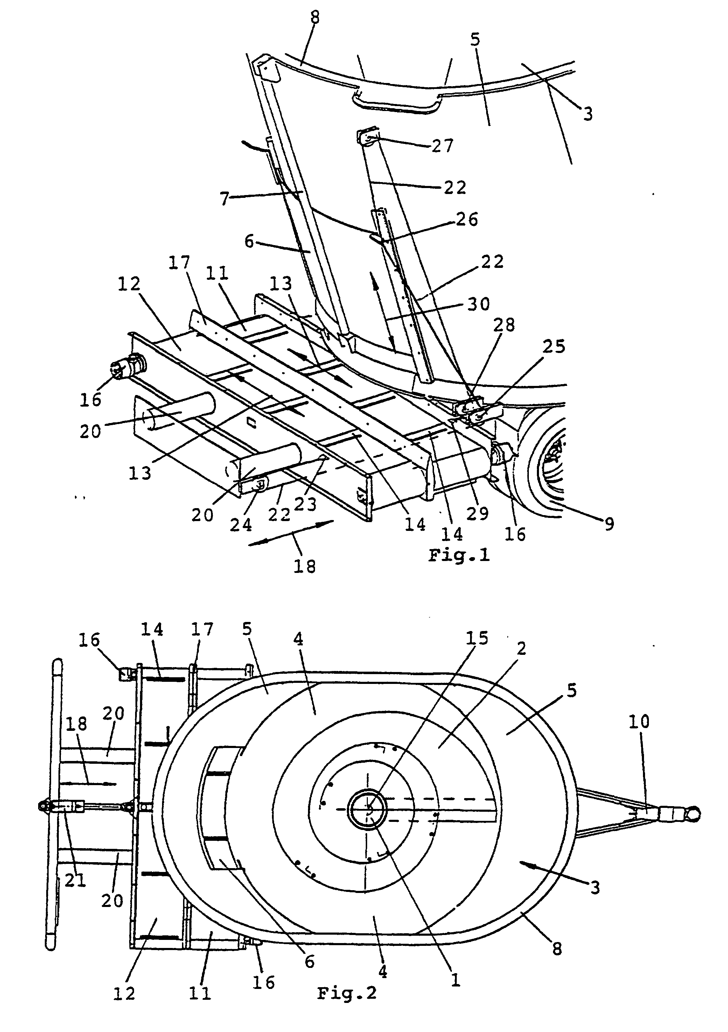

The embodiment of Figures 1 and 2 is a mixing device comprising a mixing element 1 in the form of a rotor which rotates about a vertical axis 15. Rotor 1 includes a helical blade 2, it is driven from the bottom side of the device.

The mixing chamber 3 of the device has a bottom 4 and a circumferential side wall 5, which joins bottom 4. Mixing chamber 3 has an open upper side, through which the mixing chamber 3 can be filled with fodder which is to be mixed and/or loosened and which is to be delivered at a feeding place. At the rear side, side wall 5 is provided with a closable outlet opening, which is closed by means of a slide 6.

In Figures 1 and 2, the outlet opening is closed by slide 6, which slide 6 can be opened by means of hydraulic cylinder 7, which is connected to the upper edge 8 of side wall 5 on the one hand and to slide 6 on the other hand.

In Figure 1, one of the wheels 9 of the mixing device can be distinguished, and Figure 2 shows a coupling member 10 present on the front side of the device, by means of which the device can be coupled to a tractive vehicle (not shown).

At the rear side, near the outlet opening with slide 6, the device is fitted with two conveyor belts 11, 12, which are positioned side by side and which are capable of movement in transverse direction relative to the direction of movement of the device, as is indicated by arrows 13. Both conveyor belts 11, 12 are provided with carriers 14 in the form of ribs, which are mounted on the belt surface transversely to the direction of movement of the conveyor belts 12, 13.

The two conveyor belts 11, 12 can be driven at a desired speed in both directions by means of electric or hydraulic motors 16.

Provided between the two conveyor belts 11, 12 is a stationary guide strip 17, which closes the space between the two conveyor belts 11, 12. As a result, fodder which falls onto the conveyor belts 11, 12 cannot land between the two conveyor belts.

The two conveyor belts 11, 12 can be shifted in the direction of movement of the device as indicated by means of arrow 18. To that end, guide rods 20 are mounted on the device, along which rods said shifting can take place. Said shifting can be carried out by means of hydraulic cylinder 21, as is shown in Figure 2.

Figure 1 shows a construction wherein said shifting of the conveyor belts 11, 12 takes place in dependence on the position of slide 6. To that end, a cable 22 is attached to conveyor belts 11, 12 at a place indicated at 23. Cable 22 extends via pulleys 24 and 25 to slide 6, where cable 22 is attached to slide 6 at a place indicated at 26. Cable 22 extends further via pulleys 27 and 28 to conveyor belts 11, 12, where cable 22 is attached at a place indicated at 29.

It will be apparent that when slide 6 is moved upwards, as a result of which the outlet opening is opened, the two conveyor belts 11, 12 will be moved in rearward direction. The position of the conveyor belts 11, 12 thereby depends on the extent to which slide 6 has been moved, that is, the degree to which the outlet opening has been opened. As a result of that, the conveyor belts will be shifted such that the fodder flowing from the mixing chamber 3 will land on the conveyor belts 11, 12 approximately in the centre thereof, near guide strip 17, so that the same amount of fodder will be deposited onto each of the conveyor belts.

When slide 6 is hardly open, if at all, the conveyor belts 11, 12 will be positioned partially under bottom 4. When slide 6 is entirely open, the conveyor belts 11, 12 will be positioned entirely or nearly entirely beside said bottom 6, seen from above.

When the mixed fodder is to be delivered on one side of the device, the conveyor belts 11, 12 will move in the same direction. When the mixed fodder is to be delivered on either side of the device, the conveyor belts 11, 12 will move in opposite directions. The amount of fodder that is being delivered can be controlled by varying the degree to which slide 6 is opened as well as the speed of the conveyor belts 11, 12.

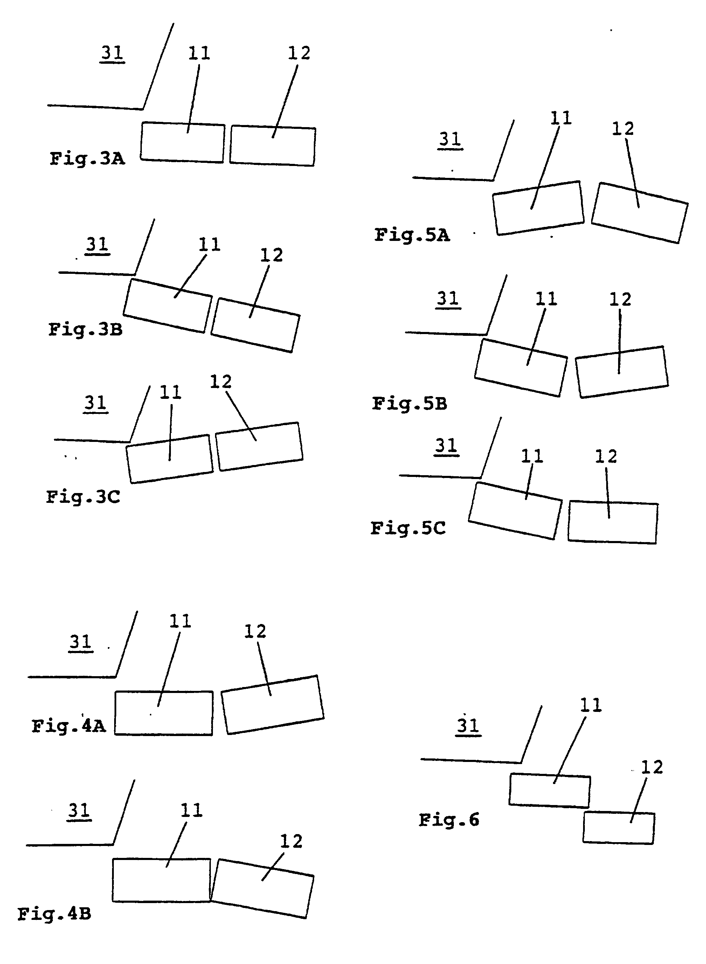

Depending on the nature of the fodder, for example the length of the fibres that are present and the degree to which the fodder can roll over the surface of the conveyor belts 11, 12, the conveyor belts can take up various positions, whereby they may or may not be shiftable. Figures 3 - 6 show a number of such positions, wherein a part of bottom 4 and side wall 5, at the location of slide 6, is indicated at 31 in all figures.

Figure 3A shows two substantially identical conveyor belts 11, 12, which are positioned side by side and whose surfaces lie in the same horizontal plane.

Figures 3B and 3C show two conveyor belts positioned side by side, whose surfaces lie in one sloping plane. The sloping position influences the manner in which the fodder is distributed over the conveyor belts once it has fallen thereon.

Figures 4A and 4B show an embodiment wherein conveyor belt 11 occupies a horizontal position and wherein the surface of conveyor belt is inclined.

Figures 5A and 5B show an embodiment wherein the conveyor belts 11, 12 slope in opposite directions, whilst in Figure 5C the two conveyor belts slope in the same direction.

Figure 6 shows an embodiment wherein conveyor belt 12 is mounted partially under conveyor belt 11. The fodder will fall mainly on conveyor belt 11 in that case, and part of the fodder will subsequently fall on conveyor belt 12.

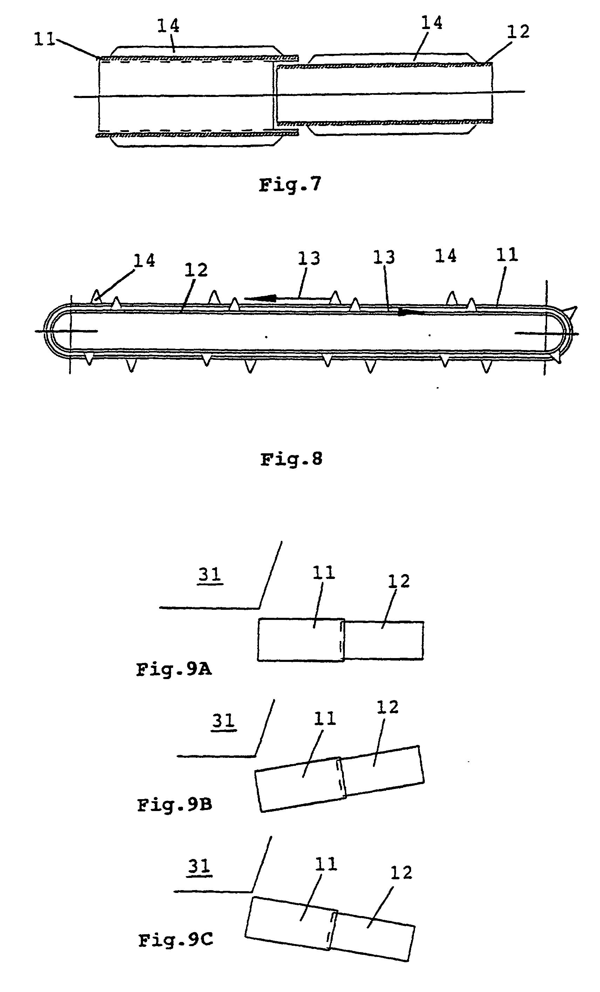

Another embodiment is shown in Figures 7 - - 9. In this embodiment, conveyor belts 11, 12 are partially positioned one within the other. To that end, the guide rollers of conveyor belt 11 have a larger diameter than the guide rollers of conveyor belt 12. The upper and lower parts of conveyor belt 12 are spaced closer together than the lower and upper parts of conveyor belt 11, so that conveyor belt 12 can extend between the upper and lower parts of conveyor belt 11. As a result, , no guide strip 17 is needed and conveyor belts 11, 12 connect very well to each other.

Figure 7 is a cross-sectional view of the two conveyor belts and Figure 8 is a view from the right-hand side of Figure 7.

Figures 9A, 9B and 9C show three positions in which the conveyor belts of Figures 7 and 8 may be mounted.

The schematically indicated embodiments are merely examples, several other embodiments are possible.

## Claims

1. A mobile device for delivering fodder, including a storage chamber (5) and conveying means mounted outside the storage chamber (5), which comprise two conveying elements (11, 12) for carrying off the fodder to a place outside the device, which conveying elements (11, 12) are capable of movement in opposite directions, which storage chamber (5) is provided with an outlet opening for passing the fodder from the storage chamber (5) to the conveying elements (11, 12), **characterized in that** the two conveying elements (11, 12) are arranged substantially side by side, along substantially parallel directions of movement (13) of the conveying elements.

2. A device according to claim 1, **characterized by** means for mixing and/or loosening fodder, wherein the storage chamber (5) is a mixing chamber fitted with a movable mixing element (1).

3. A device according to any one of the preceding claims, **characterized in that** said conveying elements (11, 12) are conveyor belts or conveyor chains.

4. A device according to any one of the preceding claims, **characterized in that** said outlet opening is a closable opening.

5. A device according to any one of the preceding claims, **characterized in that** the substantially parallel directions of movement (13) of the conveying elements (11, 12) extend substantially transversely to the direction of movement of the device.

6. A device according to any one of the preceding claims, **characterized by** control means are present which can selectively cause the two conveying elements (11, 12) to move in the same direction or in opposite directions (13) at the same speed or at different, adjustable speeds.

7. A device according to any one of the preceding claims, **characterized in that** the device is fitted with wheels (9) and **in that** the device can be coupled to a tractive vehicle, wherein the conveying means are mounted on the side of the device remote from the tractive vehicle.

8. A device according to any one of the preceding claims, **characterized in that** the storage chamber (5) is fitted with one or more mixing elements (1) which rotate about substantially vertical axes (15).

9. A device according to any one of the preceding claims, **characterized by** shifting means are present for moving one conveying element (11, 12), or both, in a direction (18) substantially transversely to their direction of movement.

10. A device according to claim 9, **characterized in that** said shifting means are capable of moving a conveying element (11, 12) in dependence on the degree to which the outlet opening has been opened.

11. A device according to any one of the preceding claims, **characterized in that** one conveying element (11, 12), or both, is (are) fitted with guide rollers whose axes of rotation include an angle with the horizontal.

12. A device according to any one of the preceding claims, **characterized in that** the two conveying elements (11, 12) are so mounted that one conveying element is positioned partially under the other.

13. A device according to any one of the preceding claims, **characterized in that** guide rollers of one of the two conveying elements (12) have a smaller diameter than guide rollers of the other conveying element (11), and **in that** the former conveying element (12) is positioned partially within said other conveying element (11).

14. A method for transporting fodder to a feeding place by means of a mobile device comprising a storage chamber (5), the fodder being carried off to two feeding places simultaneously by means of two conveying elements (11, 12) positioned near each other, which move in opposite directions, **characterized in that** two conveying elements (11, 12) are used which are arranged substantially side by side along substantially parallel directions of movement of the conveying elements.

## Patentansprüche

1. Fahrbare Vorrichtung zum Zuführen von Futter, mit einer Speicherkammer (5) und Fördermitteln, die außerhalb der Speicherkammer (5) angebracht sind die zwei Förderelemente (11, 12) zum Wegtragen von Futter zu einem Ort außerhalb der Vorrichtung aufweisen, wobei die Förderelemente (11, 12) in entgegengesetzte Richtungen bewegbar sind, und wobei die Speicherkammer (5) mit einer Auslassöffnung zum Passieren des Futters von der Speicherkammer (5) zu den Förderelementen (11, 12) ausgestattet ist, **dadurch gekennzeichnet, dass** die zwei Förderelemente (11, 12) entlang der im wesentlichen parallelen Bewegungsrichtungen (13) der Förderelemente im wesentlichen nebeneinander angeordnet sind.

2. Vorrichtung gemäß Anspruch 1, **gekennzeichnet durch** Mittel zum Mischen und/oder Lockern des Futters, wobei die Speicherkammer (5) eine Mischkammer ist, die mit einem bewegbaren Mischelement (1) ausgerüstet ist.

3. Vorrichtung gemäß einem der vorhergehenden Ansprüche, **dadurch gekennzeichnet, dass** die Förderelemente (11, 12) Förderbänder oder Förderketten sind.

4. Vorrichtung gemäß einem der vorhergehenden Ansprüche, **dadurch gekennzeichnet, dass** die Auslassöffnung eine verschließbare Öffnung ist.

5. Vorrichtung gemäß einem der vorhergehenden Ansprüche, **dadurch gekennzeichnet, dass** die im wesentlichen parallelen Bewegungsrichtungen (13) der Förderelemente (11, 12) sich im wesentlichen quer zu der Bewegungsrichtung der Vorrichtung erstrecken.

6. Vorrichtung gemäß einem der vorhergehenden Ansprüche, **gekennzeichnet durch** vorhandene Steuerungsmittel, die wahlweise die zwei Förderelemente (11, 12) veranlassen können, sich in die gleiche Richtung oder in entgegengesetzte Richtungen (13) mit der gleichen Geschwindigkeit oder mit unterschiedlichen, einstellbaren Geschwindigkeiten zu bewegen.

7. Vorrichtung gemäß einem der vorhergehenden Ansprüche, **dadurch gekennzeichnet, dass** die Vorrichtung mit Rädern (9) ausgerüstet ist und dass die Vorrichtung mit einem Zugfahrzeug verbunden werden kann, wobei die Fördermittel auf der Seite der Vorrichtung entfernt von dem Zugfahrzeug angebracht sind.

8. Vorrichtung gemäß einem der vorhergehenden Ansprüche, **dadurch gekennzeichnet, dass** die Speicherkammer (5) mit einem oder mehreren Mischelementen (1) ausgerüstet ist, die um eine im wesentlichen vertikale Achse (15) rotieren.

9. Vorrichtung gemäß einem der vorhergehenden Ansprüche, **gekennzeichnet durch** vorhandene Verschiebemittel zum Bewegen des einen Förderelements (11, 12) oder beider Förderelemente (11, 12) in eine Richtung (18) im wesentlichen quer zu ihrer Bewegungsrichtung.

10. Vorrichtung gemäß Anspruch 9, **dadurch gekennzeichnet, dass** die Verschiebemittel geeignet sind, ein Förderelement (11, 12) in Abhängigkeit von dem Grad zu bewegen, in dem die Auslassöffnung geöffnet ist.

11. Vorrichtung gemäß einem der vorhergehenden Ansprüche, **dadurch gekennzeichnet, dass** das eine Förderelement (11, 12) oder beide mit Führungsrollen ausgerüstet ist (sind), deren Rotationsachse einen Winkel zur Horizontalen aufweist.

12. Vorrichtung gemäß einem der vorhergehenden Ansprüche, **dadurch gekennzeichnet, dass** die zwei Förderelemente (11, 12) so angebracht sind, dass das eine Förderelement teilweise unter dem anderen positioniert ist.

13. Vorrichtung gemäß einem der vorhergehenden Ansprüche, **dadurch gekennzeichnet, dass** die Führungsrollen von einem der zwei Förderelemente (12) einen kleineren Durchmesser als die Führungsrollen des anderen Förderelements (11) haben, und dass das erstgenannte Förderelement (12) teilweise innerhalb des anderen Förderelements (11) positioniert ist.

14. Verfahren zum Transportieren von Futter zu einem Futterplatz mittels einer fahrbaren Vorrichtung mit einer Speicherkammer (5), wobei das Futter simultan zu zwei Futterplätzen hin mittels zweier Förderelemente (11, 12) weggetragen wird, die nahe beieinander positioniert sind und die sich in entgegengesetzte Richtungen bewegen, **dadurch gekennzeichnet, dass** zwei Förderelemente (11, 12) verwendet werden, die im wesentlichen nebeneinander entlang der im wesentlichen parallelen Bewegungsrichtungen der Förderelemente angeordnet sind.

## Revendications

1. Dispositif mobile destiné à délivrer du fourrage, comprenant une chambre de stockage (5) et un moyen de transport monté à l'extérieur de la chambre de stockage (5), qui comprend deux éléments de transport (11, 12) destinés à emmener le fourrage vers un endroit à l'extérieur du dispositif, lesquels éléments de transport (11, 12) peuvent se déplacer dans des directions opposées, laquelle chambre de stockage (5) est munie d'une ouverture de sortie destinée à faire passer le fourrage de la chambre de stockage (5) aux éléments de transport (11, 12), **caractérisé en ce que** les deux éléments de transport (11, 12) sont agencés pratiquement côte à côte suivant des directions pratiquement parallèles de déplacement (13) des éléments de transport.

2. Dispositif selon la revendication 1, **caractérisé par** un moyen destiné à mélanger et/ou aérer le fourrage, où la chambre de stockage (5) est une chambre de mélange munie d'un élément de mélange mobile (1).

3. Dispositif selon l'une quelconque des revendications précédentes, **caractérisé en ce que** lesdits éléments de transport (11, 12) sont des courroies de transport ou des chaînes de transport.

4. Dispositif selon l'une quelconque des revendications précédentes, **caractérisé en ce que** ladite ouverture de sortie est une ouverture pouvant être fermée.

5. Dispositif selon l'une quelconque des revendications précédentes, **caractérisé en ce que** les directions de déplacement pratiquement parallèles (13) des éléments de transport (11, 12) s'étendent pratiquement transversalement à la direction de déplacement du dispositif.

6. Dispositif selon l'une quelconque des revendications précédentes, **caractérisé en ce que** des moyens de commande sont présents, lesquels peuvent amener sélectivement les deux éléments de transport (11, 12) à se déplacer dans la même direction ou dans des directions opposées (13) à la même vitesse ou bien à des vitesses différentes réglables.

7. Dispositif selon l'une quelconque des revendications précédentes, **caractérisé en ce que** le dispositif est muni de roues (9) et **en ce que** le dispositif peut être relié à un véhicule tracteur, où les moyens de transport sont montés sur le côté du dispositif à distance du véhicule tracteur.

8. Dispositif selon l'une quelconque des revendications précédentes, **caractérisé en ce que** la chambre de stockage (5) est munie d'un ou plusieurs éléments de mélange (1) qui tournent autour d'axes pratiquement verticaux (15).

9. Dispositif selon l'une quelconque des revendications précédentes, **caractérisé en ce que** des moyens de décalage sont présents pour déplacer un élément de transport (11, 12), ou bien les deux, dans une direction (18) pratiquement transversale à leur direction de déplacement.

10. Dispositif selon la revendication 9, **caractérisé en ce que** les moyens de décalage peuvent déplacer un élément de transport (11, 12) en fonction du degré suivant lequel l'ouverture de sortie a été ouverte.

11. Dispositif selon l'une quelconque des revendications précédentes, **caractérisé en ce qu'**un élément de transport (11, 12), ou les deux, est(sont) munis de rouleaux de guidage dont les axes de rotation présentent un certain angle par rapport à l'horizontale.

12. Dispositif selon l'une quelconque des revendications précédentes, **caractérisé en ce que** les deux éléments de transport (11, 12) sont montés de sorte qu'un premier élément de transport est positionné partiellement sous l'autre.

13. Dispositif selon l'une quelconque des revendications précédentes, **caractérisé en ce que** les rouleaux de guidage de l'un des deux éléments de transport (12) présentent un diamètre plus petit que celui des rouleaux de guidage de l'autre élément de transport (11) et **en ce que** le premier élément de transport (12) est positionné partiellement à l'intérieur dudit autre élément de transport (11).

14. Procédé destiné à transporter du fourrage vers un lieu d'affourragement au moyen d'un dispositif mobile comprenant une chambre de stockage (5), le fourrage étant amené aux deux lieux d'affourragement simultanément au moyen des deux éléments de transport (11, 12) positionnés à proximité l'un de l'autre, qui se déplacent dans des directions opposées, **caractérisé en ce que** deux éléments de transport (11, 12) sont utilisés, lesquels sont agencés pratiquement côte à côte suivant des directions de déplacement pratiquement parallèles des éléments de transport.
